Europäisches Patentamt

(19) European Patent Office

Office européen des brevets

(11) Publication number: **0 082 705**
**A1**

## (12) EUROPEAN PATENT APPLICATION

(21) Application number: 82306790.5

(22) Date of filing: 20.12.82

(51) Int. Cl.³: **C 02 F 1/44**
**B 01 D 13/00**

(30) Priority: 21.12.81 US 334961

(43) Date of publication of application:
29.06.83 Bulletin 83/26

(84) Designated Contracting States:
BE DE FR GB IT NL

(71) Applicant: E.I. DU PONT DE NEMOURS AND COMPANY
Legal Department 1007 Market Street
Wilmington Delaware 19898(US)

(72) Inventor: Applegate, Lynn E.
5115 New Road
Wilmington Delaware 19808(US)

(74) Representative: Jones, Alan John et al,
CARPMAELS & RANSFORD 43 Bloomsbury Square
London, WC1A 2RA(GB)

(54) Sea water desalination process.

(57) In the desalination of sea water using a reverse osmosis
device, the treatment of the reverse osmosis membrane with
acid and a solution of hydrolyzable tannin.

EP 0 082 705 A1

AD-5210

## TITLE
SEA WATER DESALINATION PROCESS

### BACKGROUND OF THE INVENTION

Permselective separation processes such as dialysis, ultrafiltration and reverse osmosis have long been used for the separation of impurities from aqueous mixtures and the desalination of brackish and sea waters. A continuing problem in the use of reverse osmosis membranes is the build-up of fouling layers of clays, salts, and anhydrous heavy metal oxides. The build-up of fouling layers typically reduces water flux through the reverse osmosis membranes and increases the salt passage. In many reverse osmosis applications, treatment of a membrane with aqueous solutions of hydrolyzable tannin provides a significant reduction in salt passage for a fouled membrane. However, these techniques have heretofore been considered inapplicable to processes for the purification of sea water, since the addition of hydrolyzable tannin solution to normal sea water results in the formation of a precipitate which aggravates the fouling of the permeator.

### Summary of the Invention

The instant invention provides an improved process for the treatment of sea water in a reverse osmosis permeator which overcomes the difficulties previously encountered in the use of a hydrolyzable tannin solution.

Specifically, the instant invention provides, in the process for reducing the salinity of sea water by contacting a permselective structure with the sea water under a pressure greater than the osmotic pressure of the sea water, the improvement comprising adding to the sea water (a) acid in an amount sufficient to reduce the pH of the sea water to less than about 5.0 and (b) about from 5 to 80 mg/l of a solution of hydrolyzable tannin.

## Detailed Description of the Invention

The permselective membranes which can be used in the instant invention include any of the several compositions and types known in the art, and can be used in the form of flat films, coatings and porous substrates in sheet or tubular form or as thin-walled, hollow capillaries or fibers. The membranes are preferably made of synthetic organic polymers and have asymetric structures such as those described in U.S. Patents 3,133,132 and 3,567,632, both hereby incorporated by reference. Asymetric, polymeric membranes have on one surface a relatively thin skin of dense polymer and on the other surface a relatively more porous, more thick and less dense supporting structure and have permselected properties dependent on the direction of passage of the permeate through the structure.

The instant process is particularly adapted for the treatment of sea water. The term sea water, as used herein, is understood to have its normal meaning. In general, sea water will have a salt concentration of at least about 25,000 milligrams per liter of which sodium chloride and magnesium chloride are the principal components. For purposes of testing the present invention, synthetic sea water, having a salt concentration of 35,000 milligrams per liter of a variety of six salts, is used. This synthetic sea water is prepared according to the specification of ASTM D-1141-52.

According to the instant invention, acid is added to the sea water used as a feed for the reverse osmosis permeator, in an amount sufficient to reduce the pH of the sea water to less than about 5.0. In general, a pH of from about 2 to 5 is used and a sea water feed having a pH of about from 3 to 4 is particularly preferred. A wide variety of acids can be used to adjust the pH, so long as the acid exhibits sufficient solubility to reduce the pH to the desired level and is chemically compatible with the membrane in the desired pH range. Sulfuric, hydrochloric and citric acids are particularly convenient for use in the instant process, and citric acid is especially preferred because of its easy handling and convenient storage.

In accordance with the present invention, a solution of hydrolyzable tannin is added to the sea water feed adjusted to a pH of less than about 5.0. The hydrolyzable tannins suitable for use in treating the permselective membranes in accordance with the present invention are conveniently obtained by extracting leaves, twigs, bark, fruit and gall from trees and plants. The term "hydrolyzable" means that the tannin can be hydrolyzed with hydrolytic agents such as acids, alkali, hot water or enzymes to obtain gallic acid (such tannins are gallotannins) or ellagic acid (such tannins are ellagitannins). Such tannins are common, well known compositions and are discussed extensively in "Chemistry of Vegetable Tannins" by Haslam, Academic Press, London 1966, pp. 91-125, hereby incorporated by reference. Particular hydrolyzable tannins are usually identified from the source (tree or plant) of extraction, as, for example, chinese gall (tannic acid), mimosa tannins, quebracho tannins, wattle tannins, chestnut tannins, eucalyptus tannins, tea extract tannins, and the like.

In general, such tannins can be structurally characterized as hydrolyzable mixtures of complex polyphenolic substances having molecular weights in the range of 900-3000. They can be obtained by leeching leaves, galls, fruits, bark, and the like, with acetone and/or water, followed by extraction of the resulting solution with ethyl acetate, and evaporation of the ethyl acetate.

The preferred tannin for use in this invention is tannic acid. This tannin is obtained from the extraction of oak and sumac nut galls and is an amorphous powder occurring as glistening scales or spongy masses varying in color from yellow-white to light-brown.

The solution of hydrolyzable tannin is used in a concentration of about from 5 to 80 milligrams per liter and preferably about from 10 to 20 milligrams per liter. In general, a pressure during treatment of about from 5500 to 7,000 kPa can be used. The treatment is generally conducted at a temperature range of from about 0 to 35°C. The treatment with the hydrolyzable tannin solution or tannic acid is generally conducted at such frequency as is necessary to maintain the performance characteristics of the membrane at the desired level. In general, the treatment is conducted for a period of about from 10 to 60 minutes, and preferably about from 10 to 30 minutes for every 500-1000 hours of operating time.

The instant invention provides a process which is applicable to the treatment of permeators used for the desalination of sea water and which is equally as effective as the previous processes which required removal of the permeator from operation. At the same time, the instant process can be used with sea water without the precipitation and fouling previously encountered in such treatment.

The invention is further illustrated by the following specific examples.

Example 1

A commercially available reverse osmosis permeator was operated on a 35,000 mg/l synthetic seawater feed solution, prepared according to ASTM D-1141-52, at 5515 kPa feed pressure, 25°C and 30% conversion. The salt passage was 0.96%. A solution containing tannic acid (1056 mg/l) plus citric acid (27,000 mg/l) was injected into the seawater feed stream at such a rate to obtain 20 mg/l tannic acid and 500 mg/l citric in the seawater feed solution. This resulted in a feed pH of 3.4. After 30 minutes of treatment, the injection was stopped and after about 15 minutes of further operation the salt passage had decreased to 0.60%. No change in the product flow was observed.

Example 2

The general procedure of Example 1 was repeated, except that the permeator had a initial salt passage of 2.70% and the treatment solution used was 10 mg/l tannic acid plus 500 mg/l citric acid. After 30 minutes of treatment, the injection was stopped and the salt passage had decreased to 0.67%.

Example 3

The general procedure of Example 2 was repeated, except that 500 mg/l of $NaHSO_3$ was added to the seawater feed along with the tannic acid and citric acid. A salt passage before and after treatment was 2.48 and 0.66%, respectively.

Example 4

The general procedure of Example 3 was repeated, except that hydrochloric acid instead of

0082705

citric acid was added to the seawater feed in an amount to lower the pH to 2.5. The salt passage before and after treatment was 2.56 and 0.80%, respectively.

Example 5

The general procedure of Example 2 was repeated, except that 200 mg/l of citric acid was used instead of the 500 mg/l used in Example 2. The pH of the seawater feed during treatment varied between 4.7 and 4.8. The salt passage before and after treatment was 1.44 and 0.88%, respectively.

CLAIMS:

1. In the process for reducing the salinity of sea water by contacting a permselective structure with the sea water under a pressure greater than the osmotic pressure of the sea water, the improvement comprising adding to the sea water (a) acid in an amount sufficient to reduce the pH of the sea water to less than about 5.0 and (b) about from 5 to 80 mg/l of a solution of hydrolyzable tannin.

2. A process of Claim 1 wherein the amount of acid added is sufficient to reduce the pH of the feed water to about from 2 to 5.

3. A process of Claim 2 wherein the amount of acid added is sufficient to reduce the pH of the feed water to about from 3 to 4.

4. A process of/Claims 1/ any one of to 3 wherein the acid added to the seawater feed is sulfuric, hydrochloric or citric acid.

5. A process of Claim 4 wherein the acid added to the seawater feed consists essentially of citric acid.

6. A process of/Claims 1/ any one of to 5 wherein the solution of hydrolyzable tannin consists essentially of tannic acid at a concentration of from about 5 to 80 mg/l.

European Patent Office

EUROPEAN SEARCH REPORT

0082705

Application number

EP 82 30 6790

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 886 066 (C.CHEN) *Claims 1,2,4-7,11; column 11, line 16 - column 15, line 1; examples 2,4,5,7,8,9,11,13* | 1-6 | C 02 F 1/44 B 01 D 13/00 |
| | --- | | |
| X | US-A-3 853 755 (J.B.GANCI) *Claims 1,4; column 2, line 37 - column 3, line 4; column 5, line 61 - column 6, line 10; column 7, line 1 - column 8, line 40; column 10, lines 19-30; column 11, line 42 - column 12, line 6* | 1-6 | |
| | --- | | |
| A | US-A-3 660 281 (F.W.TOBER) *Column 1, lines 28-31; column 2, lines 4-19; column 4, lines 23-40; column 5, line 49 - column 6, line 26; column 7, lines 16-22; claims 1,5* | 1,6 | TECHNICAL FIELDS SEARCHED (Int. Cl. 3) |
| | --- | | |
| A | TECHNISCHE MITTEILUNGEN KRUPP, vol. 39, no. 2, November 1981, pages 79-94, Essen (DE); A.WEISE et al.: "Planung und Bau einer Anlage zur simultanen Erprobung von verschiedenen Modulen zur Brack- und Meerwasserentsalzung mittels umgekehrter Osmose". *Page 82, column 2, line 7 - page 83, column 2, line 31* | 1,2,4 | C 02 F B 01 D |
| | ------ | | |

The present search report has been drawn up for all claims

| Place of search | Date of completion of the search | Examiner |
|---|---|---|
| THE HAGUE | 30-03-1983 | HOORNAERT P.G.R.J. |